# EUROPEAN PATENT SPECIFICATION

(11) **EP 2 769 127 B1**
(45) Date of publication and mention of the grant of the patent: **06.01.2016**
(21) Application number: 12780859.0
(22) Date of filing: 17.10.2012
(51) Int. Cl.: F16K 17/04, F15B 19/00

(54) **APPARATUS AND METHOD FOR CALIBRATING A VALVE**
VORRICHTUNG UND VERFAHREN ZUR KALIBRIERUNG EINES VENTILS
APPAREIL ET PROCÉDÉ D'ÉTALONNAGE D'UNE SOUPAPE

(30) Priority: 21.10.2011 IT BO20110600
(43) Date of publication of application: 27.08.2014
(73) Proprietor: S.T. S.r.l., 40012 Calderara di Reno (IT)
(72) Inventor: APADULA, Graziano, I-40133 Bologna (IT); APADULA, Graziantonio, I-40133 Bologna (IT); GARCEA, Rocco, I-40134 Bologna (IT)
(74) Representative: Conti, Marco
(86) International application number: PCT/IB2012/055658
(87) International publication number: WO 2013/057671

(56) References cited:
- WO-A1-2006/069692
- GB-A- 878 019
- US-A- 2 834 374
- US-A- 3 228 419
- US-A1- 2004 009 080
- US-A1- 2005 264 100
- US-A1- 2006 039 811

## Description

### Technical field

The present invention relates to an apparatus and a method for calibrating a pressure limiting valve.

Such a valve may be used as a device for limiting dangerous overpressures oil-hydraulic pipes.

In particular, the present invention relates to a method and an apparatus for calibrating a valve able to limit, in a hydraulic circuit, the maximum pressure (so-called "anti-shock" function).

In other words this limiting valve prevents a predefined overpressure value from being exceeded in the hydraulic circuit in which it is inserted.

### Background art

Pressure limiting oil-hydraulic valves which can be inserted in a hydraulic circuit in order to separate (or sealingly isolate) a high pressure portion (or zone) of the hydraulic circuit from a low pressure portion (or zone) of the hydraulic circuit are already known, e.g. from patent documents per WO2006/069692, US2006/039811 and US2005/264100.

These valves are inserted inside a receiving seat.

These valves comprise a valve body and a closing body (or closing member) which are arranged inside the receiving seat.

In particular the closing member is slidable with respect to the valve body along a first direction of longitudinal - or axial - extension, between a closed position in which the closing member bears against an associated seat of the valve body and an open position in which the closing body does not bear against the aforementioned seat and a fluid through-flow region is defined between stem and valve body.

The valve body has, formed therein, a central hole which defines the fluid through-flow region; the said valve body may have a guide for the stem of the closing member, which allows axial displacements of the latter.

The closing member comprises a substantially conical or spherical portion - or head - mating with the valve body and a stem with an elongated form extending from this head.

The stem of the closing body is provided with a threaded portion which is remote from the head.

The valve further comprises a sleeve for centring/guiding and locking the stem, which is slidable with respect to the walls of the seat receiving the said valve.

The centring/locking sleeve is provided with a threaded hole inside which the stem is screwed and locked.

This valve also comprises a spring extending longitudinally or axially along the first direction.

It should be noted that the spring is arranged between the sleeve and the valve body.

This valve normally isolates a high pressure region of the oil-hydraulic circuit from a low pressure region (closing member in closed position) and is designed to connect the high pressure region to the low pressure region (closing member in open position) if the relative pressure between the high pressure duct and the low pressure duct is greater than a predetermined operating pressure value of the valve (usually corresponding to an overpressure or shock condition in the high pressure circuit).

It should be noted that the prestress of the spring (compression of the spring when there is no pressure difference between high pressure region and low pressure region) determines the value of the operating pressure (value of the pressure difference between high pressure region and low pressure region).

Therefore, in this valve, correct adjustment of the prestress of the spring (so-called valve calibration) is of fundamental importance in order for the closing body to be moved from the closed position into the open position when there is a predefined pressure difference between high pressure region and low pressure region, corresponding to the desired operating pressure.

It should be noted that this prestress coincides with the resilient force developed by the spring when compressed to the first working length, usually predefined by the surrounding conditions for each valve size.

According to the prior art, valve calibration is performed in situ, namely by connecting the valve to a "test" circuit between a high pressure zone and a low pressure zone.

This calibration method envisages screwing the sleeve onto the stem in a predefined position, inserting it inside the seat and applying a predetermined relative pressure between the high pressure circuit and low pressure circuit corresponding to the desired operating pressure value. This calibration method is repeated until the closing member establishes communication between the two - high pressure and low pressure - zones at the set (required) pressure difference value between the two - high pressure and low pressure - regions.

Therefore, hitherto, with this calibration method, ensuring a high degree of precision for the valve calibration is particularly time-consuming.

In addition, a valve thus designed is relatively complex and requires long assembly times.

A further drawback encountered in this type of valve is that it does not guarantee a high degree of reliability or a high operating stability; in fact, this valve is unable to ensure over time that opening of the valve occurs at the operating value for which the valve has been calibrated (using the method described above).

This problem is partly solved by adopting additional locking systems for preventing unscrewing of the threaded pair, although this further complicates the structure and assembly of the valve.

This drawback is particularly critical in the applications where the opening precision is an essential requirement.

### Disclosure of the invention

In particular, it is an object of the present invention to provide a calibration apparatus and method which allow calibration of a pressure limiting valve in a particularly simple and quick manner.

Said objects are fully achieved by the apparatus and the method according to the present invention, which is characterized by the contents of the claims indicated below.

With the calibration method according to the invention it is possible to perform calibration of a valve having: a valve body defining a passage for a fluid; a closing member comprising a head and a stem and movable with respect to the valve body along a longitudinal direction of extension of the stem from a position for closing the passage, where the head is sealingly engaged with the valve body, to a position for opening the passage and vice versa, in an opening and closing direction, respectively; a sleeve which can be joined to said stem of the closing member at an end of the stem opposite to said head; a spring arranged between the sleeve and the valve body and designed to exert a force on said closing member along the closing direction.

"Family/size" of the valve is defined as the set of valves able to operate at a predetermined maximum flowrate of fluid (oil).

"Initial working length Li" is defined as the length of the spring when the closing member is in the closed position.

The method (valid for all categories/sizes of such) is characterized in that it comprises the following steps:
- retaining the closing member in the closed position;
- detecting a quantity representing a value of a reaction force of said spring;
- detecting (or measuring) the position, along the axis of the stem, of the sleeve;
- varying the position of the sleeve along the stem in order define a position of said sleeve along the stem where the quantity representing the reaction force of the spring detected has a predefined value;
- irreversibly locking the sleeve with respect to the closing member in the defined position.

In other words, the method envisages the following steps according to a preferred mode of implementation:
a) selecting, moving and fixing the closing member in the position corresponding to the closed condition;
b) selecting, moving and positioning the corresponding valve body (preferably formed as two parts);
c) selecting and positioning the correct spring;
d) detecting the value of the reaction force of said spring;
e) measuring the sag of the spring and the corresponding axial height of the assembly;
f) compressing the spring from the prestress length (valve closed) to a predefined (bedding-in) length smaller than the prestress length;
g) fatigue cycle with repetition of the operations d) to f) a predetermined number of times (for example 5 to 10 times);
h) selecting and positioning the sleeve able to satisfy both the fixed assembly position and the force value corresponding to the calibration pressure;
i) varying the position of the sleeve along the stem as far as the predetermined position for assembly of said sleeve along the stem, while checking that the reaction force of the spring detected during extension, has reached the value corresponding to the calibration pressure;
k) if the outcome of the procedure is negative, repeating the operations h) and i) until the aforementioned position and force values fall within the permissible deviations;
l) mechanically locking in an irreversible manner the sleeve with respect to the closing member in the defined position (valve closed), without the use of threads.

Locking according a preferred mode of implementation of the method is performed upon reaching the closed position, from the open position of the closing member (corresponding to the fatigue length) and after verifying further that the position of the sleeve along the stem corresponds to the predetermined assembly position and that the reaction force of the spring, detected during extension, reaches the value corresponding to the calibration pressure.

Moreover, it should be noted that, prior to locking, it is envisaged selecting a sleeve and a valve body which have dimensions such as to allow complete opening of the valve during operation, with a sufficient margin. The aforementioned objects are also solved by an apparatus for calibrating a pressure limiting valve having: a valve body defining a passage for a fluid; a closing member comprising a head and a stem movable with respect to the valve body along a longitudinal direction of extension of the stem from a position for closing the passage, where the head is sealingly engaged with the valve body, to a position for opening the passage and vice versa, in an opening direction and closing direction, respectively; a sleeve which can be joined to said stem of the closing member at an end of the stem opposite to said head; a spring arranged between the sleeve and the valve body and designed to exert a force on said closing member along the closing direction.

The apparatus is characterized in that it comprises:
- means for locking said closing member in the closed position;
- means for detecting a quantity representing a value of a reaction force of said spring;
- means for detecting/measuring the position, along the axis of the stem, of the sleeve;
- handling means designed to allow a variation in position of said sleeve along said stem;
- means for performing threadless connection of the sleeve with respect to the stem, which can be activated so as to allow irreversible locking of the sleeve to the stem in a position of the sleeve along the stem where a value of said quantity representing a reaction force value of said spring corresponding to a predefined value is detected.

Preferably, the mechanical (threadless) connection between the sleeve and the stem is a connection suitable for being carried out dynamically in an arbitrary position (i.e. in a position which is not predetermined, contrarily to the case of the threaded coupling) of the stem; for example, said mechanical connection between the sleeve and the stem comprises plastic deformation, or a bi-cone (that is, a conical coupling), or a laser welding.

Hence, preferably, the mechanical connection between the sleeve and the stem is carried out dynamically in an arbitrary position (i.e. in a position which is not predetermined, contrarily to in the case of the threaded coupling) of the stem; for example, said mechanical connection between the sleeve and the stem is performed through a plastic deformation, or the use of a bi-cone (that is, a conical coupling), or through laser welding.

### Brief description of drawings

This characteristic feature, together with others, will emerge more clearly from the following description of a preferred embodiment illustrated purely by way of a non-limiting example in the accompanying sets of drawings in which:
- Figure 1 shows a cross-sectional view of a preferred embodiment of the valve according to the invention in a closed configuration;
- Figure 2 shows a cross-sectional view of a preferred embodiment of the valve according to the invention in an open configuration;
- Figures 3a, 3b, 3c; 4a, 4b, 4c; 5a, 5b, 5c show respective side, plan and cross-sectional views of different embodiments of a detail of the valve according to Figures 1 and 2;
- Figure 6 shows a schematic view of the valve according to Figures 1 to 2;

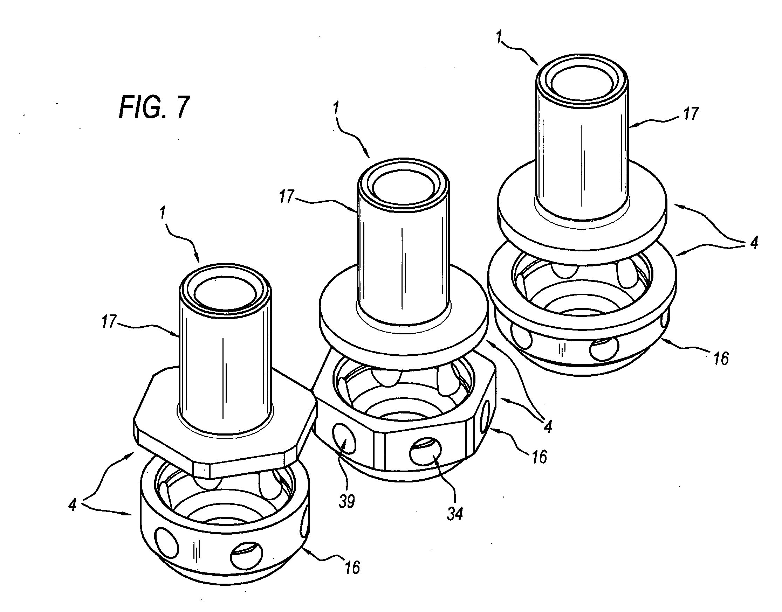

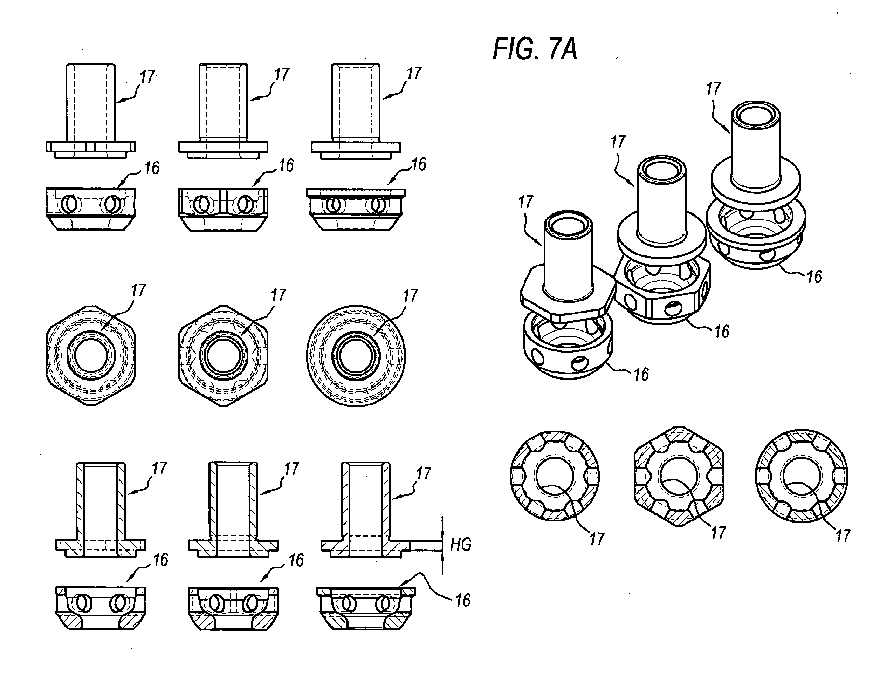

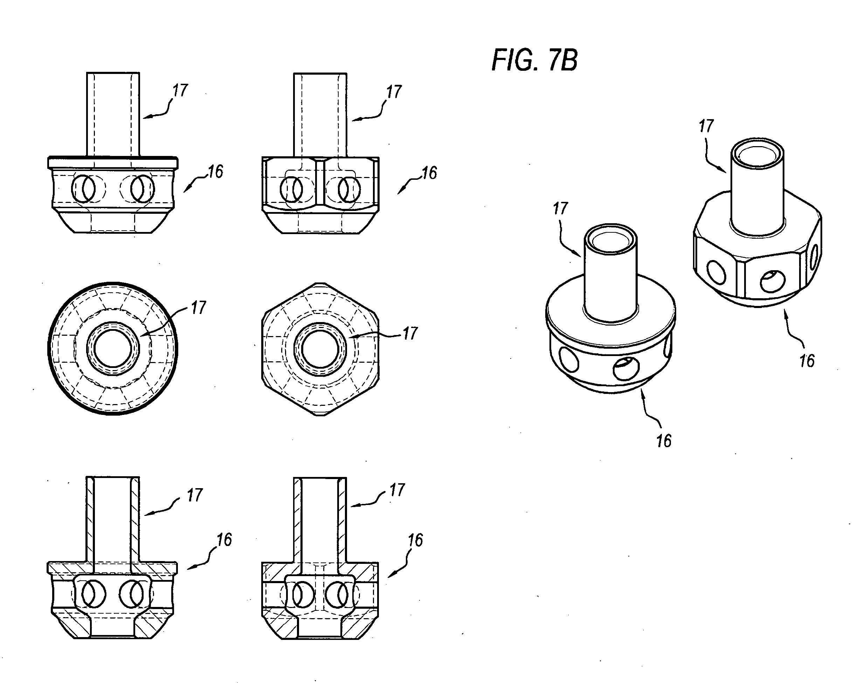

- Figure 7 shows a schematic perspective view of different embodiments of a detail of the valve according to Figures 1 and 2;
- Figures 7A and 7B each show various views of three embodiments of details of the valve according to the invention;
- Figure 8 shows a schematic view of the apparatus for calibrating a valve according to the invention.

### Detailed description of preferred embodiments of the invention

The reference number 1 denotes a pressure limiting valve for oil-hydraulic circuits according to the present invention.

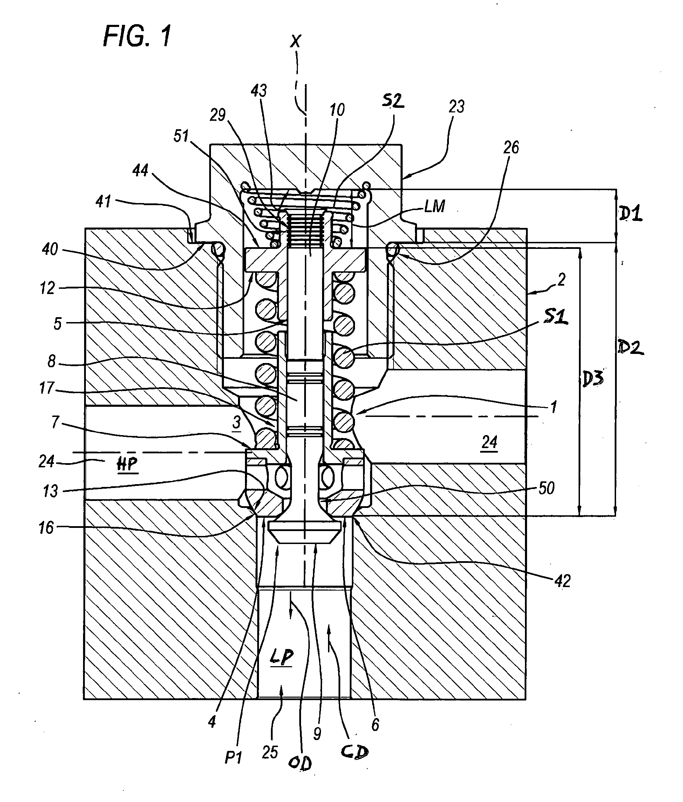

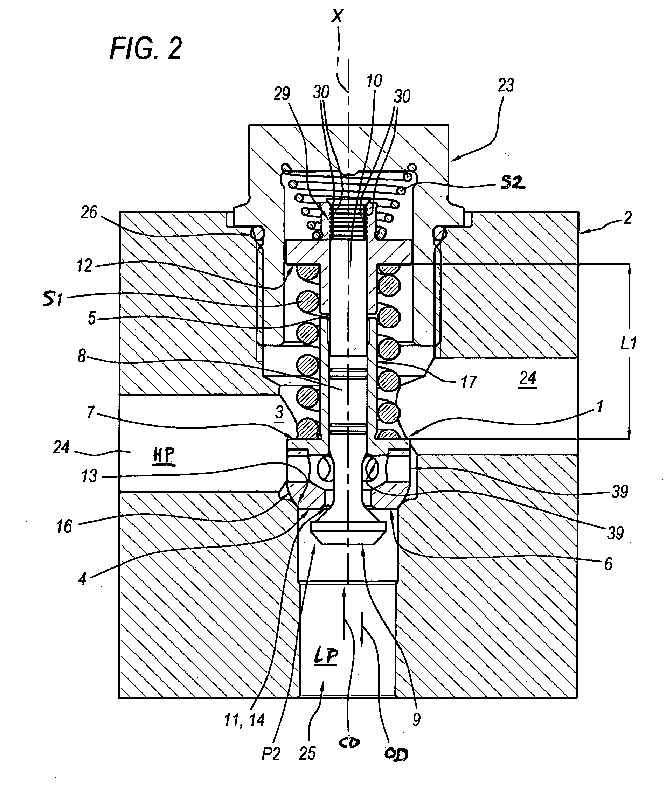

This valve 1, in Figures 1 and 2, is arranged in an oil-hydraulic circuit.

In particular, the valve 1 is arranged between a high pressure zone HP and a low pressure zone LP.

Normally (i.e. during normal operation of the hydraulic circuit) the pressure in the high pressure zone HP is greater than the pressure in the low pressure zone LP.

Figure 1 shows a containing body 2 of the valve 1 showing the two zones, i.e. high pressure zone HP and low pressure zone LP.

The containing body 2 has, formed therein, a seat 3 for receiving the valve 1.

The valve 1 (or the components of the valve 1 which will be introduced and described more fully below) are arranged inside the seat 3 of the containing body 2.

It should be noted (see Figure 1) that the containing body 2 has, internally, a duct 24 defining the high pressure zone HP and a duct 25 defining the low pressure zone LP.

In this connection it should be noted that the seat 3 is formed in the region where the duct 24 of the containing body 2 is connected to the duct 25 of the containing body 2.

This seat 3 is closed at the top by a closing cap 23.

In this connection it should be noted that the closing cap 23 is removably fixed to the containing body 2 (preferably screwed into it) so as to allow insertion or removal of the valve 1 from the containing body 2.

Preferably the cap 23 has the form of an overturned cup.

A seal 26 is arranged between the cap 23 and the containing body 2 for performing sealed closure of the seat 3.

The components of the valve 1 according to the invention which are arranged inside the seat 3 will be described below.

These components will be described with reference to an assembled configuration of the valve 1 (or with reference to an operating configuration of the valve 1) as shown in Figure 1.

The valve 1 comprises a valve body 4 and a closing member 8. According to the invention, the valve body 4 is designed to engage sealingly with the walls of said seat 3 and defines internally a passage 11 for a fluid between the two - high pressure and low pressure - zones (HP, LP).

It should be noted that the seat 3 has, formed therein, a conical sealing surface defining a tapered zone 13; the closing member 8 engages sealingly with the walls of this conical sealing surface (or tapered zone) 13. Preferably and in a non-limiting manner the valve body 4 comprises two parts which can be joined together, i.e. a first part 16 and a second part 17.

The first part 16 is designed so as to mate with the walls of the seat 3 and form a seal against these walls.

It should be noted that this first element 16 has a central hole 11 defining a seat 14 against which the closing member 8 bears (as will be described more fully below) so as to allow closing of the through-passage defined by the said hole 11.

Moreover this first part 16 comprises peripheral holes 39 for the through-flow of the fluid.

These holes 39 are arranged radially around the valve axis.

It can be seen from Figure 1 that, during use, a first surface 6 (bottom surface with reference to Figure 1) of the first part 16 is in contact with the low pressure fluid LP, while a second portion 7 (top portion with reference to Figure 1) of the first part 16 is in contact with the high pressure fluid HP. The second part 17 has a (tubular) hollow cylindrical portion 31 and a flange-shaped portion 32.

It should be noted that the tubular portion 31 of the second part 17 has, formed therein, a longitudinal or axial through-hole 35 for receiving the stem 10.

When the two parts 16,17 are joined together a bottom opening of the hole 35 faces a top opening of the hole 11.

It should be noted that the second part 17 is designed to guide the stem 10 during its movement in the opening direction OD / closing direction CD. It should be noted that the flanged portion 32 of the second part 17 is formed so as to engage with the first part 16; in particular it should be noted that the first part 16 has (situated above with reference to Figure 1) a seat 52 for centring the flanged portion 32, shaped so as to allow centring of the flanged portion 32 or the second part 17 with respect to the first part 16.

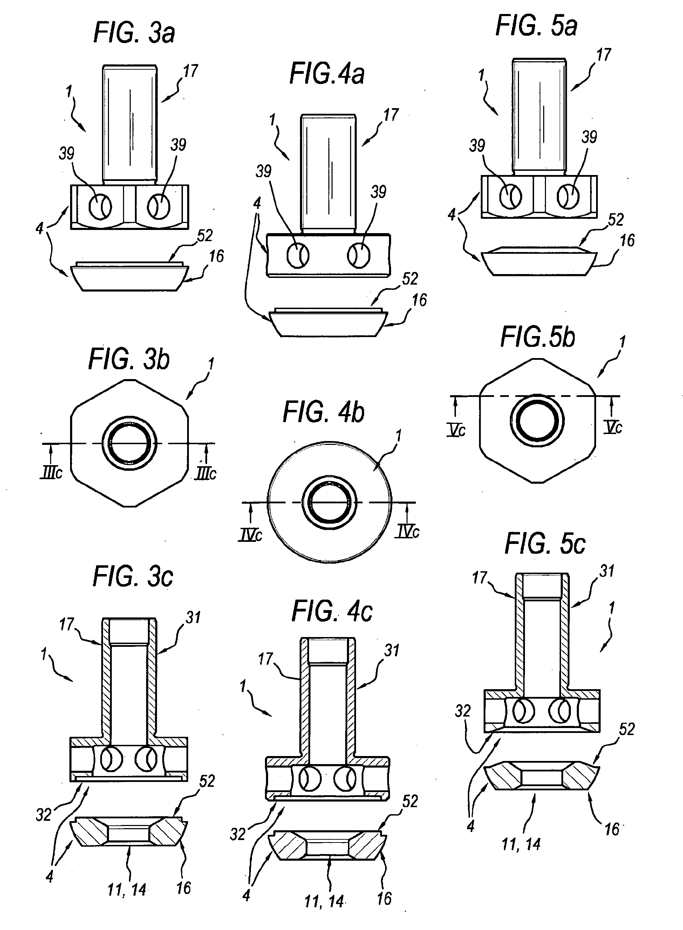

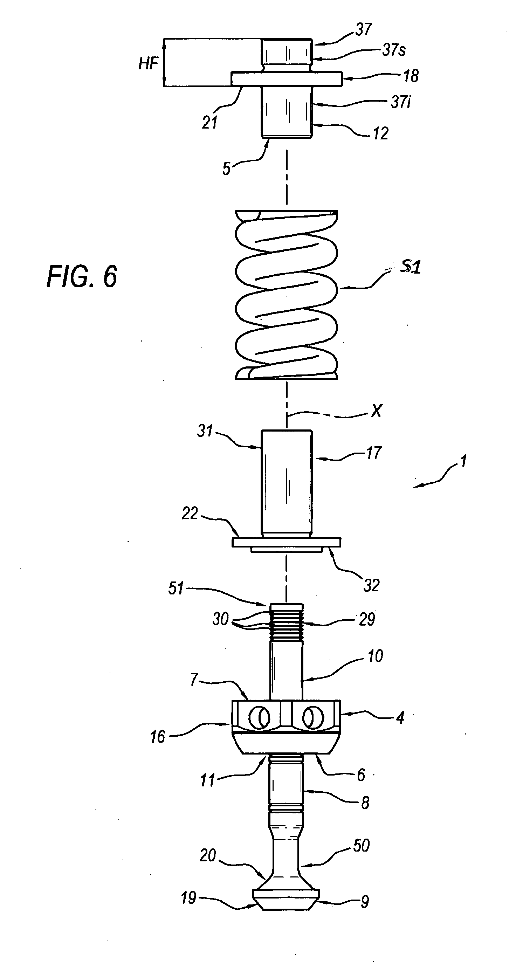

Figures 3, 4 and 6 show different embodiments of the valve body 4.

In particular, it should be noted that the first part 16 comprises a portion 52 for centring the second part 17, which may have a cylindrical form (as shown in Figures 3a, 3b, 3c, 4a, 4b, 4c) or conical form (as shown in Figure 4).

The second part 17 is preferably removably engaged with the first part 16. The closing member 8 will be described below.

The closing member 8 comprises a closing head 9 and a stem 10 connected to the closing head 9.

The closing head 9 is arranged at a first end 50 of the stem 10.

Preferably the stem 10 and the closing head 9 are formed as one piece.

The closing member 8 is movable with respect to the valve body 4 along a longitudinal or axial direction X of extension of the stem 10 between an open position P2 (shown in Figure 2) and a closed position P1 (shown in Figure 1).

In particular it should be noted that the closing member 8 is movable from the closed position P1 into the open position P2 along an opening direction (indicated by the reference OD) and from the open position P2 into the closed position P1 along a closing direction (indicated by the reference CD), opposite to the opening direction.

In this connection it should be noted that Figure 1 shows the closed position P1 of the closing member, where the head 9 of the closing member 8 bears against the walls of the central hole (Figure 1) of the first part 16 of the valve body 4; in this closed position P1 the passage of the fluid from the high pressure circuit HP to the low pressure circuit LP is prevented.

It should be noted that the closing member 8 is slidably associated with the valve body 4 (in particular the part 17).

In particular the constant diameter portion of the closing member 8 is associated in sliding engagement with the valve body 4 (part 17).

In the valve the overall length of the closing member 8 is determined so as to reach the predetermined prestress of the spring S1 in the specific axial locked position of the sleeve 12 on the stem 8.

It should be noted that this also allows precise calibration without the need for further operations of the anti-cavitation function (as will be described more fully below): in fact the anti-cavitation spring S2 (shown in Figures 1 and 2 and more fully described below) is set automatically to the desired prestress, which does not happen in the prior art where calibration of the anti-cavitation spring must be obtained by means of additional operations. The closing head 9 is in contact with the fluid of the high pressure circuit HP and with the fluid of the low pressure circuit LP.

By way of a non-limiting example, in accordance with that shown in Figure 1, the closing head 9 comprises an enlarged portion 19 (remote from the valve body 4) and a shaped portion 20 (which is preferably conical or spherical).

It should be noted that the shaped portion 20 is formed so as to engage sealingly with the walls of the central hole 11 (as shown in Figure 1) when the closing member 8 is in the closed position P1.

According to the example shown in Figure 1, the closing head 9 protrudes from the central hole 11 of the valve body 4 in the direction of the low pressure zone LP (with reference to Figure 1).

In particular, it should be noted that closing head 9 projects outside of the valve body 4.

In particular, it should be noted that, when the closing member 8 is in the closed position, the enlarged portion 19 of the closing head 9, in the example shown in Figure 1, is in contact with the fluid under low pressure LP; on the other hand, the shaped portion 20 makes sealing contact with the walls of the seat 14 and separates the fluid under high pressure HP from the fluid under low pressure LP.

It should be noted that both the pressure of the fluid under low pressure LP and the pressure of the fluid under high pressure HP act on the head 9 of the closing member 8.

Moreover the head 9 has, preferably, a geometrical form suitable for minimizing the dynamic flow forces which are generated during operation with the valve open.

The stem 10 of the closing member 8 has, preferably, a cylindrical form.

It can be seen from Figure 1 that the stem 10, during use, is arranged slidably inside the through-hole 35 of the second part 17 of the valve body 4.

In this connection, it should be noted that the second part 17 of the valve body 4 allows the stem 10 to be guided.

According to the invention, the valve 1 further comprises a sleeve 12. During use the sleeve 12 is fixed to (or locked with respect to) the stem 10 of the closing member 8 by means of a threadless connection, as will be described more fully below.

The sleeve 12 comprises a tubular portion 37 and a portion 18 (below also called flange) protruding radially from the tubular portion 37.

It should be noted that the flange 18, in the example shown, has a circular form in plan view and has a radius greater than that of the tubular portion 37.

It should be noted the radially protruding portion 18 is arranged in a central position of the tubular portion 37 (in this connection the tubular portion may therefore be divided into an upper hollow tubular or cylindrical portion 37S and a lower hollow tubular or cylindrical portion 37I).

The radially protruding portion 18 (flange) is preferably designed so as to be centred relative to the side walls of the seat 3 and/or the cap.

The sleeve 12 is preferably, but not exclusively, formed as one piece.

It should be noted that the sleeve 12, in particular the tubular portion 37, has an axially extending through-hole 5 formed therein.

The stem 10 of the closing member 8, as shown in Figure 1, is designed so that it may be inserted inside said through-hole 5 of the sleeve 12.

In particular, the sleeve 12 is joined to said stem 10 of the closing member 8 at a second end 51 of the said stem 10, opposite to the first end 50. According to the invention, the valve 1 comprises a spring S1 arranged between the sleeve 12 and the valve body 4.

The spring S1 is designed to exert a force on the sleeve 12 (and consequently on the closing member 8 to which the sleeve 12 is fixed) along the closing direction CD.

Moreover, it should be noted that preferably the spring S1, which is arranged between the sleeve 12 and the valve body 4, is designed for all the calibration settings of the same valve category, so as to satisfy the following conditions:
- the spring exerts, when compressed to the initial working length Li, on the sleeve 12 and on the closing member 8 (to which the sleeve 12 is fixed), the axial force corresponding to the operating pressure of the valve (also called calibration pressure);
- said initial working pressure of the spring S1 coincides with the length thereof when the valve components are in the position envisaged for permanent locking of the sleeve 12 to the stem 10 of the closing member 8;

- the spring may be bedded-in ("bedding-in" is understood as meaning a conditioning procedure performed by means of mechanical cycles for "slackening" the spring, as per a practice known in the sector) to a length smaller than its length in the fully open operating position, but greater than the necessary minimum length for ensuring its structural and functional integrity (for example ensuring that the space between the turns is not eliminated);
- during bedding-in the torsional tension is less than the maximum tension of the spring material permissible during this operation;
- possibility of achieving the fully open operating condition of the valve with maximum safety of valve strength and functionality.

It should be noted that, during use, the spring S1 is arranged outside the hollow tubular or cylindrical portion 31 of the second part 17 and the lower hollow tubular or cylindrical portion 37I of the sleeve 12.

It should be noted that the second part 17 (in particular the hollow tubular or cylindrical portion of the second part 17) performs the function of centring the spring S1.

It should be noted that this spring S1 bears against a lower surface 21 of the radially protruding portion or flange 18 of the sleeve 12 and against an upper surface 22 of the flange-shaped portion 32 of the second part 17.

It should be noted that the spring S1 opposes opening of the valve 1 (namely opposes displacement of the closing member 8 from the closed position P1 into the open position P2), exerting a force in the closing direction CD of the closing member 8.

With reference to the example illustrated, the spring S1 operates under compression during the entire stroke of the closing member 8, namely the spring S1 is compressed both when the closing member 8 is arranged in the closed position P1 and when the closing member 8 is arranged in the open position P2.

Certain aspects relating to the components of the valve 1 previously mentioned will be described more fully below.

It should be noted that the following forces act on the closing member 8 (in particular on the head 9 of the closing member 8):
- the resilient force of the spring S1;
- the force exerted by the high pressure fluid HP;
- the force exerted by the low pressure fluid HP;
- the dynamic flow forces during operation of the valve in the open position.

According to another aspect of the invention, the sleeve 12 and the valve body 4 are formed so as to define a fully open position of the closing member and maximum compression position of the spring S1, where the spring is not yet in a totally compressed condition (beyond which the spring cannot be compressed and is irreversibly deformed); in particular, sleeve and valve body are formed so that, in said fully open position, they mate or make contact; this could occur for example during particularly wide opening of the closing member 8 (for example in the case of forced opening).

In other words, this prevents the spring S1 from being compressed beyond a predefined maximum safety value.

It should be noted, however, that the sleeve 12 and the valve body 4 are formed so as to ensure that the closing member 8 may perform a predetermined stroke during normal operation.

In other words, the sleeve 12 and the valve body 4 are formed so as to mate, during forced opening of the closing member, and define both an open position of the said closing member slightly greater than the maximum position which can be reached during normal operation (in the position where the free flow cross-sectional area of the fluid assumes a maximum value) and a maximum compression of the spring S1, where the spring is not yet subject to stresses which may damage it irremediably nor stresses which are greater than those reached during the bedding-in process.

It should be noted, however, that the sleeve and the valve body 4 are formed so as to ensure that the closing member 8 may perform a stroke greater than the maximum stroke possible during operation, ensuring complete opening of the valve.

In other words, this prevents the spring S1 from being compressed beyond a predefined maximum safety value and the valve from opening completely.

In this connection, the fact that the sleeve 12 and the valve body 4 are designed to mate during opening of the closing member 8, avoiding compression of the spring beyond the maximum permissible limit for the functionality and structural integrity thereof, prevents the possibility of compression of the spring S1 beyond a predetermined minimum length Lmin and consequent damage thereto or malfunctions.

In order to explain more fully the above it should be noted that preferably the valve (with particular reference to the valve body and sleeve) is configured as follows (with reference to Figure 1); the terminal end of the hollow tubular or cylindrical portion 31 of the second element 17 and the end of the bottom hollow tubular or cylindrical portion 37i of the sleeve 12 are formed so as to mate during the stroke or the opening movement of the closing member 8, defining a maximum stroke of the closing member in the opening direction, to which full compression of the spring S1 corresponds.

Below locking of the sleeve 12 to the stem 10 according to the invention will be described in detail.

It should be noted, according to the invention, that the sleeve 12 is irreversibly locked to the stem 10.

The term "irreversible locking" is understood as meaning that said locking is irremovable or permanent.

Moreover, said locking, according to the invention, consists of locking without mechanical threading.

According to the invention, the sleeve 12 is locked to the stem 10 irreversibly in a predetermined longitudinal or axial position of the stem 10 so that the spring S1 exerts a closing force of predefined value on the closing member 8 when the closing member 8 is in the closed position P1, corresponding to a predetermined operating pressure of the valve 1 (pressure difference between the high pressure region and the low pressure region).

Moreover, the predefined assembly position on the apparatus 8 is simultaneously respected.

This operating/activating pressure for opening the valve 1, which depends on the through-flow area of the fluid and the closing force of predetermined value of the spring S1 on the closing member 8, will be referred to below also as "calibration pressure".

It should be noted that the force of predetermined value which the spring S1 exerts on the closing member 8 when the closing member is in the closed position P1 is produced by a prestress of the spring S1.

Preferably locking of the sleeve 12 to the stem 10 of the closing member 8 is performed by means of plastic deformation of the sleeve 12 (previously joined to the stem 10).

Even more preferably, said locking is performed by means of crimping. Preferably, locking of the sleeve 12 to the closing member 8 is performed in two successive steps (thus ensuring greater safety and reliability over time):
- i) a first step during which the sleeve 12, keyed onto the stem 10, is deformed plastically in the radial direction (primary locking);
- ii) a second step during which the terminal end 51 of the stem 10 is deformed (secondary locking).

It should be noted that, per se, primary locking (i) is already sufficient to ensure locking of the stem 10 with respect to the sleeve 12; secondary locking (ii) is performed in order to increase the reliability of locking of the stem 10 with respect to the sleeve 12.

Primary locking (i) is performed in a predefined region 29 of the stem 1. Preferably, secondary locking (ii) envisages "cupped" deformation of the second end of the stem onto a tapered hole of the sleeve.

According to a preferred mode of implementation of the method for manufacturing the valve it is envisaged determining beforehand the predefined region or zone 29 of the stem 10 on which joining to the sleeve 12 is performed.

In particular, preferably it is envisaged performing machining on the stem 10 in the zone 29 on which joining to the chosen sleeve 12 is performed, in order to prepare this zone 29 for joining.

It is also pointed out that, preferably, the sleeve 12 and/or the stem 10 comprise, in the joining zone 29, radial projections 30 or teeth 30 defining a toothed zone (obtained during the aforementioned machining operation). Even more preferably, the aforementioned radial projections 30 or teeth 30 are formed on the stem 10.

Preferably said teeth 30 are formed on the component (12 or 10) which has the greatest mechanical hardness, normally the stem 10 for technical reasons (the stem is made of hardened material so as to slide easily inside the associated guide of the valve body 4).

In particular, it should be noted that the teeth 30, owing to the radial compressive action during the step i), plastically deform the component (either the sleeve 12 or the stem 10) of lesser hardness (on which the teeth 30 are not present); in this way, by means of plastic deformation, a splined joint of the male/female type is formed between the components, i.e. sleeve 12 and stem 10.

These projections 30 therefore have the effect of increasing the effectiveness of locking performed by means of plastic deformation of the sleeve 12 with respect to the stem 10 (as well as the friction between the aforementioned components, i.e. sleeve 12 and stem 10, there is also interpenetration between the materials of the said parts 10 and 12).

A further advantage of this type of joint between the components 10 and 12 obtained by forming teeth 30, by means of machining, on the harder component and corresponding recesses, by means of plastic deformation, during joining together of the components 10 and 12, is the elimination of any axial or longitudinal play between the aforementioned components 10 and 12.

Preferably, prior to the aforementioned irreversible locking operation, it is envisaged subjecting the spring S1 to a training cycle, where the spring S1 is subject to a plurality or series of consecutive compressions (preferably between 5 and 10 repetitions or compressions).

It should be noted that, according to the invention, the axial compression X (sag) of the spring S1 and the corresponding calibration force of the spring S1 on the closing member when the latter is in the closed position, are determined by means of direct measurement; these parameters are used to select the sleeve 12.

In this connection, according to another aspect of the invention, the sleeve 12 has dimensions such that - when the sleeve 12 is locked in the predetermined position for assembly (namely in the zone 29 of the stem) - it defines a predetermined axial compression (also called "sag") of the spring S1 and, consequently, a predefined calibration force of the spring S1.

Preferably, it is envisaged measuring the force exerted by the spring S1 on the closing member 8 by means of a dynamometer composed of a load cell with which a position transducer is associated; this dynamometer and position transducer allow, advantageously, direct measurement of the resilient force exerted by the spring S1 on the closing member 8 and the axial compression (sag) of the spring S1.

This reactive force of the spring S1 is directly related to the valve operating/opening pressure (depending on the outflow cross-sectional area).

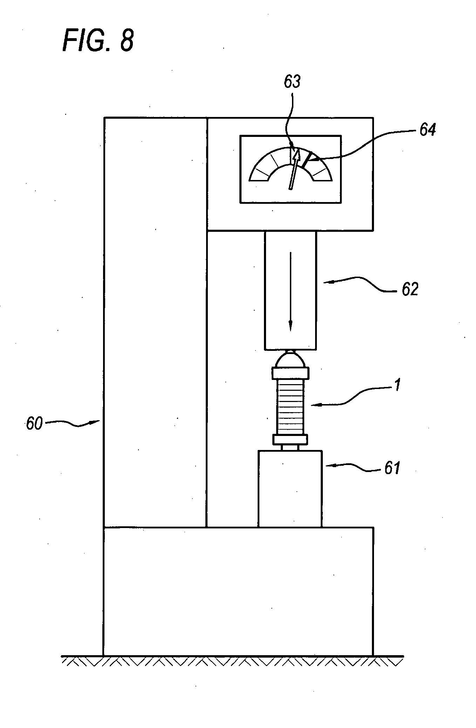

Therefore, depending on the desired operating pressure, the sleeve 12 is locked with respect to the stem 10 in a given longitudinal or axial position corresponding to a predefined reaction force of the spring S1 and the position of the components on the assembly apparatus shown in Figure 8, such as to allow the steps i) and ii), achieved by calculating with a minimum tolerance the axial extension of the sleeve 12.

It should be noted that the reaction force of the spring S1 in the closed position P1 of the closing member 8, preferably, is measured during the return stroke of the closing member 8 (or during movement of the closing member 8 in the closing direction CD).

The calibration/locking operations described above are performed on an apparatus specially designed for this purpose and shown schematically in Figure 8.

It should be noted that this type of calibration is a calibration performed "off-line", namely performed without the valve 1 having to be installed or tested in a hydraulic circuit (as is performed in the prior art).

The valve 1 is calibrated by means of a calibration apparatus 60 specially designed for this purpose, also forming part of the invention.

This calibration equipment or apparatus comprises a dynamometer for measuring a quantity representing the resilient force of the spring S1.

It should be noted that the dynamometer defines means for measuring the resilient force exerted by the spring S1.

More generally, the dynamometer defines means for detecting a quantity representing a value of a reaction force of the spring S1.

This apparatus also comprises gripping means designed to hold the valve body 4 with respect to the frame of the apparatus (for example a seat for receiving the valve body 4).

The apparatus comprises means 61 for retaining or fixing the closing member in the closed position P1.

The apparatus according to another aspect also comprises means for selecting the sleeves 12, designed to chose and remove from a plurality of sleeves that sleeve which has a geometry such as to allow the predefined reaction force of the spring S1 to be obtained in the locking position assumed on the stem 10 with respect to the head of the closing member 8.

The calibration apparatus also comprises handling means designed to vary the position of the sleeve 12 with respect to the closing member 8, in particular with respect to the stem 10.

Furthermore, preferably the calibration apparatus comprises means for selecting and handling the second part or guide 17 so as to prevent damage to the valve 1 and the spring S1 and ensure that the fully open operating condition may always be reached during operation in the installations.

These handling means allow extremely precise adjustment of the position of the sleeve 12 with respect to the stem 10.

Figure 8 shows schematically a calibration apparatus 60 according to the invention.

It should be noted that 61 denotes the means for retaining or fixing the closing member 8 in the closed position P1, 62 the sleeve handling means, 63 the means for detecting the reaction force of the spring S1 and 64 the means for detecting the predefined calibration reaction force.

With this apparatus 60 it is possible to perform extremely fast and reliable calibration of the valve 1, without the need for installation of the valve 1.

In fact it should be noted that calibration is performed by means of the operations described below.

The assembled valve 1 (namely with the predetermined components correctly assembled together, but not yet locked as per steps i) and ii)) is inserted inside the calibration apparatus so that the valve body 4 is held with respect to the frame.

Similarly the closing member 8 is kept in the closed position by means of the retaining means.

It should be noted that the sleeve 12 is moved so as to compress the spring S1 until the force sensor signals that a predefined reaction force of the spring S1 is reached.

The operator checks that this predefined force of the spring S1 is actually reached with the sleeve 12 arranged in a predefined region of the stem 10, without eliminating the free space between the sleeve 12 and the guide 17; if this has not occurred it is required to fit on the valve 1 a sleeve 12 with a different height HF so that this condition does not occur, and where this should not be sufficient, a second part 17 with a different height HG so that the aforementioned conditions may occur in the assembled unit (or valve).

It should be noted that, according to a preferred embodiment, it is essential that the sleeve 12 should be correctly selected and positioned along the stem 10 so as to allow locking to be performed in accordance with steps i) and ii) described above.

In fact, as already mentioned above, the detection means also comprise a position transducer which is able to indicate the position of the sleeve 12 along the stem 10.

It should be noted that, according to the preferred embodiment, the second part 17 is designed (has dimensions) such as to define a predefined axial extension able to allow (when positioned along the stem 10) the predefined reaction force of the spring S1 to be reached and at the same time prevent elimination of the play, or free space, between the sleeve 12 and the second part 17.

In particular, the predefined axial extension of the second part 17 lies between an upper limit value, chosen to ensure the fully open operating position of the valve, and a lower limit value, for preventing jamming and/or damage to the spring and damage to the valve 1, in particular during testing (e.g. of the locking strength, the calibration force of the spring on the dynamometer, etc.) and assembly on the installations.

The apparatus preferably comprises furthermore means (not shown) for joining the sleeve 12 to the stem 10 so as to form an irreversible joint of the sleeve 12 to the stem 10.

These joining means, preferably but not exclusively, are designed to deform irreversibly (plastically) the sleeve 12 and stably lock, without threading, the sleeve 12 to the stem 10.

According to another aspect, the apparatus comprises a control and operating unit (electronic control unit) connected:
- to the detection means 63 for receiving a signal relating to said quantity representing a value of a reaction force of said spring S1 and a signal relating to the axial measurement of the position of the sleeve 12;
- to the handling means so as to drive them in such a way as to vary the position of the sleeve 12 along the stem 10 and define the aforementioned position of the sleeve 12 along the stem 10, where a value of said quantity representing a reaction force value of said spring S1 corresponding to a predefined value is detected (and, preferably, check that it is within the set tolerance, i.e. that required for steps i) and ii);
- and to the joining (or locking) means so as to activate them in the aforementioned defined position.

Moreover the control unit is connected to the selection means for determining the exact components to be assembled.

According to this aspect, the control and operating unit operates the handling means (displacing the sleeve 12 along the stem 10 with closing member 8 closed) and stops the said handling means when a predefined value of the reaction force of the spring S1 (and the compatibility of the position with steps i) and ii) has been detected; at this value the joining (or locking) means for irreversibly connecting the sleeve 12 to the stem 10 are activated.

Advantageously this allows calibration of the valve 1 to be performed in a completely automatic manner (anti-shock function).

A calibration method comprising the following steps is also defined:
- retaining the closing member (8) in the closed position (P1);
- detecting a quantity representing a value of a reaction force of said spring (S1);
- varying the position of the sleeve (12) along the stem so as to define a position of said sleeve (12) along the stem where the quantity representing the reaction force of the spring (S1) detected has a predefined value (it should be noted that the position of the sleeve is selected so as to be compatible with steps i) and ii) and with the height HG of the guide so as to avoid jamming of the spring and ensure the fully open operating condition;
- irreversibly locking the sleeve (12) with respect to the closing member (8) in the defined position.

It should be noted that with the apparatus and the method according to the invention it is possible to calibrate the valve 1 "off the bench" (off-line calibration of the valve) with a considerable saving in terms of time and cost.

It should also be noted that, by means of locking performed according to the methods described above, it is possible to fix together stably over time sleeve 12, closing member 8, spring S1 and valve body 4; this prevents the prestress of the spring S1 from being modified over time as a result of movement of the sleeve 12 away from the valve body 4, preventing any variation in th operating or opening pressure of the valve 1.

The irreversibility and the stability of locking in fact ensure that over time (when the valve is closed) sleeve 12, closing member 8, spring S1 and valve body 4 do not modify their relative position.

In this way the valve 1 is extremely precise and reliable over time, ensuring that the actual operating pressure (at which opening of the closing member 8 occurs) is that desired or actually set during calibration, remaining constant over time or differing minimally from that actually set during calibration (owing to inevitable fatigue of the spring).

The valve 1, therefore, in addition to being able to be manufactured in a relatively simple manner, is calibrated in an extremely precise and rapid manner.

Moreover the aforementioned calibration is reliable over time.

According to yet another aspect of the invention, the valve 1 comprises an additional spring S2 having an anti-cavitation function.

According to this aspect, the valve body 4 is also movable with respect to the walls of the seat 3 between a closed position (shown in Figures 1 and 2), where the valve body 4 bears against the walls of the seat 3 (in particular against the walls of the conical sealing surface 13 or the tapered zone 13), and an open position (not shown) where the valve body 4 does not bear against the walls of the seat 3 (in particular against the walls of the conical sealing surface 13) and defines, together with the walls of the seat 3 and the valve body 4, a further fluid through-passage between the low pressure duct LP and the high pressure duct HP.

It should be noted that, in the example shown in Figure 1, the valve body 4 is movable from the closed position into the open position and vice versa along the direction X in the opening direction CD and closing direction OD opposite to the opening direction OD and closing direction CD of the closing member 8.

Owing to this additional spring S2, inserted into the structure of the valve 1, an anti-cavitation function may be provided in the installation circuit.

In fact, if the pressure of the high pressure circuit HP is less than that of the low pressure circuit LP by a predetermined amount, corresponding to a cavitation condition of the high pressure zone HP or emptying of the high pressure circuit HP, the valve body 4 - as a result of the relative pressure drop between the high pressure circuit HP and the low pressure circuit LP - is moved from the closed position into the open position against the action of the additional spring S2; it should be noted that the fact of having two circuits (HP, LP) in fluid communication allows the pressure to be increased in the high-pressure region HP, avoiding cavitation and emptying of this region.

It should be noted also that the fact that the closing member is designed so as to have a fixed predetermined axial length and identical axial position of the zone 29, suitable for locking the sleeve 12 (for all the valves in the same family/category) advantageously results in the radially prominent portion 18, or flange, of the sleeve 12 having a predetermined axial extension which is fixed for each category of valves; this advantageously means selecting the axial extension of the sleeve so as to ensure that the spring S1 is compressed at the load corresponding to the calibration pressure (or operating pressure) and that, at the same time, its upper face is located at a constant predetermined axial distance compatible with the anti-cavitation function requirements, in accordance with that described above regarding step ii).

It should be noted furthermore that when the valve and the associated cap are mounted in their seat/cavity the anti-cavitation spring S2 is compressed always to the same working length LM equal to the distance between the upper face of the flange 18 and bottom wall of the cap 23 (the spring S2 is operationally arranged between said upper face of the flange 18 and said bottom wall).

Therefore it is possible to provide the spring S2 with dimensions so as to have a predetermined (desired) prestress depending on the abovementioned working length LM.

It should be noted that the working length LM of the (additional) spring S2, operationally, is determined by the dimensions indicated in the figures by the references D1, D2 and D3.

The dimension D1 is defined by the axial distance between the inner (or bottom) wall 43 of the cap 23 and the flange 40 for mating with the seat 3 of the valve 1 (or the flange which axially bears against the mouth of the seat 3).

La dimension D2 is defined by the axial distance between the locating surface 41 (defined by the seat 3 so as to act as an axial contact surface for the flange 40 of the cap 23) and the bearing point 42 of the valve body 4 inside the seat 3.

This dimension D2, for each valve category, has a constant (standardized) value.

The dimension D3 is defined by the axial distance between the upper wall 44 of the sleeve 12 and the bearing point 42 of the valve body 4 in the seat 3.

In the valve 1 according to the invention this dimension D3 is kept constant for each category of valves.

It should be noted that the fact of keeping these dimensions D1, D2 and D3 constant for the valves of a same category is able to ensure a constant (and predetermined) length LM: in this way it is not required to calibrate further the spring S2 following calibration of the spring S1.

Therefore, knowing the working length LM, it is possible to select (or define the dimensions) of the spring S2 so as to obtain a predefined compression corresponding to a desired prestress (without the need for adjustment of the additional spring S2 during testing/installation).

It should be noted that these dimensions D1, D2 and D3 are specifically determined by the following parameters:
- said zone for locking the sleeve 12 along the stem 10;
- axial extension (or thickness) of the flange 18 of the sleeve 12;
- configuration of the top portion of the cap 23, defining the distance between the inner wall 43 (of the cap 23 and the flange 40 for mating with the seat 3 of the valve 1;
- the length of the closing member 10.

Said axial extension of the flange 18 of the sleeve 12 is selected so that the spring S1 has the predefined length and, at the same time, the zone for locking the sleeve 12 along the stem 10 is a predefined zone (fixed for all valves).

This involves, according to the invention, the advantages which are described below.

Firstly it is possible (and particularly easy) to prepare the stem 10 for connection to the sleeve 12 by means of a suitable configuration of this zone, resulting in a particular reliable connection.

Moreover, the length of the additional spring S2 is always constant for all the valves in the same category, the configuration of the cap 23 (as described above) remaining the same; this results in automatic calibration of the additional spring S2 when the sleeve 12 is locked on the stem 10.

This has the advantage that calibration of the anti-cavitation function is obtained already during (and as a result) of fixing of the sleeve 12 to the closing member 8, without having to perform further operations in order to perform said calibration of the spring S2 (the dimensions of the spring S2 are defined depending on the desired prestress at the length LM).

In this connection it should be noted that, in the prior art, it is required to arrange thicknesses in the region of the valve cap, after the sleeve 12 has been screwed in the correct longitudinal position (which is not known beforehand and is known only after calibration).

Alternatively, in the prior art, it is required to modify the geometrical form of the sleeve and/or the characteristic features of the spring following calibration of the spring S1; the first of these solutions requires connection of a new sleeve (with the correct geometrical form) to the closing member and repetition of the operation for calibration of the spring S1.

Therefore, in the prior art, it is required to perform a step involving specific adjustment/calibration of the anti-cavitation spring in order to set this spring to a desired compression (or a step where the length of the spring S2 is adjusted with the valve body sealingly engaged on the associated seat).

Moreover the following comments are made regarding the advantages arising from the fact that the valve body 4 is made as two parts, i.e. the first part 16 (or hydraulic sealing part 16) and the second part 17 (or part for guiding the closing member 8 and spring S1).

In the prior art the limiting valves are designed according to categories based on the maximum flowrate of the fluid to be processed.

Moreover, within each category, the limiting valves are designed based on the maximum operating pressures.

The maximum flowrate influences directly the dimensions of the valve 1 and therefore its components.

The maximum operating pressures influence directly the "population" number of the valves produced, this being understood as meaning the number of valves in a category or size, and moreover influence the spring S1, certain geometrical aspects of the valve body and the closing member and, indirectly, the other components.

According to the invention, the fact of having a limited series of parts 16 and 17 characterized by suitable geometrical variations means that, within each category, a wide range of valves with operating pressures corresponding to the various user requirements may be manufactured. Moreover, with a limited number of categories (each with a suitable population number) the market demand may be satisfied.

The advantages in terms of ease of management of the restocking and warehouse logistics both for the producer and for the end user are obvious.

Furthermore, owing to the fact that there are two parts (16, 17) which can be joined together - with the seat 3 and the first part 16 designed according to the maximum flowrate, while the dimensions of the second part 17 (or guide for the closing member and spring S1) are defined depending on the aforementioned spring S1 and closing member - the warehouse/management costs may be reduced and a wide variety of valves may be manufactured using a limited number of first and second parts.

It should be noted that the height (HF) between the surface of the flange 18 of the sleeve 12 against which the spring S1 bears and the terminal end of the said sleeve 12 in the direction (X) of extension of the stem is preferably determined depending on the length or the compression length (sag) of the spring S1 at the predefined reaction force; as a result, irrespective of the spring S1 and the operating pressures of the valve 1 (envisaged with this spring S1), the stem 10 can be connected irreversibly to the sleeve 12 in the region 29 which is predefined (namely determined during the design stage).

It should be noted that, since the valve 1 does not have threads, namely is threadless, the valve 1 may be easily manufactured at an extremely low cost and at the same time it is ensured that the calibration conditions are maintained overtime.

In fact the threadless connection advantageously does not tend to slacken over time and the prestress of the spring S1 is thus not modified in any way.

In particular, in the embodiment where mechanical deformation is preferably used, the connection is particularly stable over time.

Instead of plastic deformation the sleeve 12 could also be welded to the stem 10 or also locked to the stem 10 by means of half-cones, welding, etc.

In any case, it should be noted that according to the invention the valve 1 is threadless.

Advantageously, the valve according to the invention achieves, for the same dimensions/size, a particularly good performance in terms of maximum managed flowrate as well as a precise and constant calibration pressure (since it ensures relatively small deviations from the theoretical value).

## Claims

1. A method for calibrating a valve (1) having: a valve body (4) defining a passage (11) for a fluid; a closing member (8) comprising a head (9) and a stem (10) and movable with respect to the valve body (4) along a longitudinal direction (X) of extension of the stem (10) from a position (P1) for closing the passage (11), where the head (9) is sealingly engaged with the valve body (4), to a position (P2) for opening the passage and vice versa, in an opening direction (OD) and closing direction (CD), respectively; a sleeve (12) which can be joined to said stem (10) of the closing member (8) at an end (51) of the stem (10) opposite to said head (9); a spring (S1) arranged between the sleeve (12) and the valve body (4) and designed to exert a force on said closing member (8) along the closing direction (CD),
the method being **characterized in that** it comprises the following steps:
- retaining the closing member (8) in the closed position (P1);
- detecting a quantity representing a value of a reaction force of said spring (S1);
- varying the position of the sleeve (12) along the stem (10) in order to define a position of said sleeve (12) along the stem (10) where the quantity representing the reaction force of the spring (S1) detected has a predefined value;
- irreversibly locking the sleeve (12) with respect to the closing member (8) in the defined position.

2. The method according to claim 1, wherein, prior to said locking step, it is envisaged performing a plurality of cycles for moving the closing member (8) between the aforementioned open position (P2) and closed position (P1).

3. The method according to the preceding claim, wherein said locking is performed following a stroke of said closing member from the open position (P2) into the closed position (P1).

4. The method according to any one of claims 1 to 3, wherein said locking of the sleeve (12) with respect to the stem (10) consists in locking by means of deformation of the sleeve (12).

5. The method according to the preceding claim, wherein said locking of the sleeve (12) comprises a step involving deformation of the terminal end of the stem (10).

6. The method according to any one of claims 1 to 5, wherein the following steps are envisaged, prior to the locking step: a step for detecting the position of the sleeve (12) along the stem (10) and a step for checking that in the aforementioned detected position the sleeve (12) is arranged in a predefined position along the stem (10).

7. An apparatus for calibrating a pressure limiting valve (1) having: a valve body (4) defining a passage (11) for a fluid; a closing member (8) comprising a head (9) and a stem (10) movable with respect to the valve body (4) along a longitudinal direction (X) of extension of the stem from a position (P1) for closing the passage (11), where the head (9) is sealingly engaged with the valve body (4), to a position (P2) for opening the passage (11) and vice versa, in an opening direction (OD) and closing direction (CD), respectively; a sleeve (12) which can be joined to said stem (10) of the closing member (8) at an end (51) of the stem (10) opposite to said head (9); a spring (S1) arranged between the sleeve (12) and the valve body (4) and designed to exert a force on said closing member (8) along the closing direction (CD), the apparatus (60) being **characterized in that** it comprises:
- means (61) for locking said closing member (8) in the closed position (P1);
- means (63) for detecting a quantity representing a value of a reaction force of said spring (S1);
- handling means (62) designed to allow a variation in position of said sleeve (12) along said stem (10);
- means for performing threadless connection of the sleeve (12) with respect to the stem (10), which can be activated so as to allow irreversible locking of the sleeve (12) to the stem (9) in a position of the sleeve (12) along the stem (10) where a value of said quantity representing a reaction force value of said spring (S1) corresponding to a predefined value is detected.

8. The apparatus according to the preceding claim, comprising a control and operating unit connected:
- to the detection means (63) for receiving a signal relating to said quantity representing a reaction force value of said spring (S1);
- to the handling means so as to drive them in such a way as to vary the position of the sleeve (12) along the stem (10) and define the aforementioned position of the sleeve (12) along the stem (10) where a value of said quantity representing a reaction force value of said spring (S1) corresponding to a predefined value is detected;
- and to the joining means for activating them in the aforementioned defined position.

9. The apparatus according to either one of claims 7 or 8, wherein said detection means comprise a force sensor designed to detect a reaction force of said spring (S1).

10. The apparatus according to any one of the preceding claims 7 to 9, wherein the detection means comprise a position sensor designed to detect a position of the sleeve (12) along said stem (10).

11. The apparatus according to any one of the preceding claims 7 to 10, wherein the means for joining the sleeve (12) to the stem (10) are operationally active on the sleeve (12) so as to deform plastically the sleeve (12).

## Patentansprüche

1. Verfahren zur Kalibrierung eines Ventils (1), aufweisend einen Ventilkörper (4), definierend einen Durchgang (11) für ein Fluid, ein Schließelement (8), umfassend einen Kopf (9) und einen Schaft (10) und bewegbar zum Ventilkörper (4) entlang einer Längsausdehnungsrichtung (X) des Schafts (10) von einer Position (P1) zum Verschließen des Durchgangs (11), in der der Kopf (9) abdichtend mit dem Ventilkörper (4) im Eingriff ist, in eine Position (P2) zum Öffnen des Durchgangs und umgekehrt, jeweils in eine Öffnungsrichtung (OD) und eine Schließrichtung (CD), eine Hülse (12), die mit dem Schaft (10) des Schließelements (8) an einem Ende (51) des Schafts (10), gegenständig angeordnet zum Kopf (9), verbunden werden kann, eine Feder (S1), angeordnet zwischen der Hülse (12) und dem Ventilkörper (4), und ausgestaltet, um eine Kraft auf das Schließelement (8) entlang der Schließrichtung (CD) auszuüben, wobei das Verfahren **dadurch gekennzeichnet ist, dass** es folgende Schritte umfasst:
- Beibehalten des Schließelements (8) in der geschlossenen Position (P1);
- Erfassen einer Menge, die einen Wert einer Reaktionskraft der Feder (S1) darstellt;
- Ändern der Position der Hülse (12) entlang des Schafts (10), um eine Position der Hülse (12) entlang des Schafts (10) zu definieren, wobei die Menge, die die erfasste Reaktionskraft der Feder (S1) darstellt, einen vorgegebenen Wert aufweist;
- irreversibles Festspannen der Hülse (12) zum Schließelement (8) in der vorgegebenen Position.

2. Verfahren nach Anspruch 1, wobei vor dem Festspannungsschritt die Durchführung einer Vielzahl von Zyklen vorgesehen ist, um das Schließelement (8) zwischen der offenen Position (P2) und der geschlossenen Position (P1) zu bewegen.

3. Verfahren nach dem vorhergehenden Anspruch, wobei das Festspannen folgend auf einen Hub des Schließelements von der offenen Position (P2) in die geschlossene Position (P1) durchgeführt wird.

4. Verfahren nach einem der Ansprüche 1 bis 3, wobei das Festspannen der Hülse (12) zum Schaft (10) aus dem Festspannen mittels der Verformung der Hülse (12) besteht.

5. Verfahren nach dem vorhergehenden Anspruch, wobei das Festspannen der Hülse (12) einen Schritt umfasst, der die Verformung des Endstücks des Schafts (10) beinhaltet.

6. Verfahren nach einem der Schritte 1 bis 5, wobei vor dem Festspannungsschritt die folgenden Schritte vorgesehen sind: ein Schritt zum Erfassen der Position der Hülse (12) entlang des Schafts (10) und ein Schritt, um sicherzustellen, dass die Hülse (12) in der genannten erfassten Position in einer vorgegebenen Position entlang des Schafts (10) angeordnet ist.

7. Vorrichtung zur Kalibrierung eines Druckbegrenzungsventils (1), aufweisend einen Ventilkörper (4), definierend einen Durchgang (11) für ein Fluid, ein Schließelement (8), umfassend einen Kopf (9) und einen Schaft (10), bewegbar zum Ventilkörper (4) entlang einer Längsausdehnungsrichtung (X) des Schafts von einer Position (P1) zum Verschließen des Durchgangs (11), in der der Kopf (9) abdichtend mit dem Ventilkörper (4) im Eingriff ist, in eine Position (P2) zum Öffnen des Durchgangs (11) und umgekehrt, jeweils in eine Öffnungsrichtung (OD) und eine Schließrichtung (CD), eine Hülse (12), die mit dem Schaft (10) des Schließelements (8) an einem Ende (51) des Schafts (10), gegenständig angeordnet zum Kopf (9), verbunden werden kann, eine Feder (S1), angeordnet zwischen der Hülse (12) und dem Ventilkörper (4) und ausgestaltet, um eine Kraft auf das Schließelement (8) entlang der Schließrichtung (CD) auszuüben, wobei die Vorrichtung (60) **dadurch gekennzeichnet ist, dass** sie umfasst:
- Mittel (61) zum Festspannen des Schließelements (8) in der geschlossenen Position (P1);
- Mittel (63) zum Erfassen einer Menge, die einen Wert einer Reaktionskraft der Feder (S1) darstellt;
- Handhabungsmittel (62), die ausgestaltet sind, um eine Positionsänderung der Hülse (12) entlang des Schafts (10) zu erlauben;
- Mittel zum Herstellen eines gewindelosen Anschlusses der Hülse (12) zum Schaft (10), die so aktiviert werden können, dass das irreversible Festspannen der Hülse (12) am Schaft (9) in einer Position der Hülse (12) entlang des Schafts (10), in der ein Wert der Menge, die einen Reaktionskraftwert der Feder (S1) entsprechend einem vorgegebenen Wert darstellt, erlaubt wird.

8. Vorrichtung nach dem vorhergehenden Anspruch, umfassend eine Steuer- und Betriebseinheit, die angeschlossen ist:
- an die Erfassungsmittel (63), um ein Signal zu empfangen, das sich auf die Menge bezieht, die einen Reaktionskraftwert der Feder (S1) darstellt;
- an die Handhabungsmittel, sodass diese so angetrieben werden, dass die Position der Hülse (12) entlang des Schafts (10) geändert wird und die Position der Hülse (12) entlang des Schafts (10) definiert wird, in der ein Wert der Menge, die einen Reaktionskraftwert der Feder (S1) entsprechend einem vorgegebenen Wert darstellt, erfasst wird;
- und die Verbindungsmittel zu deren Aktivieren in der definierten Position.

9. Vorrichtung nach einem der Ansprüche 7 oder 8, wobei die Erfassungsmittel einen Kraftsensor umfassen, der ausgestaltet ist, um eine Reaktionskraft der Feder (S1) zu erfassen.

10. Vorrichtung nach einem der Ansprüche 7 bis 9, wobei die Erfassungsmittel einen Positionssensor umfassen, der ausgestaltet ist, um eine Position der Hülse (12) entlang des Schafts (10) zu erfassen.

11. Vorrichtung nach einem der Ansprüche 7 bis 10, wobei die Mittel zum Verbinden der Hülse (12) mit dem Schaft (10) betriebswirksam auf der Hülse (12) aktiv sind, sodass die Hülse (12) plastisch verformt wird.

## Revendications

1. Procédé de tarage d'une soupape (1) ayant : un corps de soupape (4) définissant un passage (11) pour un fluide ; un organe de fermeture (8) comprenant une tête (9) et une tige (10) et mobile par rapport au corps de soupape (4) le long d'une direction longitudinale (X) d'extension de la tige (10) d'une position (P1) destinée à fermer le passage (11), où la tête (9) est en prise de façon hermétique avec le corps de soupape (4), à une position (P2) destinée à ouvrir le passage et vice versa, respectivement, dans une direction d'ouverture (OD) et une direction de fermeture (CD) ; un manchon (12) pouvant être relié à ladite tige (10) de l'organe de fermeture (8) à une extrémité (51) de la tige (10) opposée à ladite tête (9) ; un ressort (S1) est disposé entre le manchon (12) et le corps de soupape (4) et conçu pour exercer une force sur ledit organe de fermeture (8) le long de la direction de fermeture (CD), le procédé étant **caractérisé en ce qu'**il comprend les étapes suivantes :
- retenir l'organe de fermeture (8) dans la position fermée (P1) ;
- détecter une quantité représentant une valeur d'une force de réaction dudit ressort (S1) ;
- varier la position du manchon (12) le long de la tige (10) afin de définir une position dudit manchon (12) le long de la tige (10) où la quantité représentant la force de réaction du ressort (S1) détectée possède une valeur prédéfinie ;
- verrouiller de façon irréversible le manchon (12) par rapport à l'organe de fermeture (8) dans la position définie.

2. Procédé selon la revendication 1, dans lequel, avant ladite étape de verrouillage, il est envisagé d'effectuer une pluralité de cycles destinés à déplacer l'organe de fermeture (8) entre les susdites positions d'ouverture (P2) et position fermée (P1).

3. Procédé selon la revendication précédente, dans lequel ledit verrouillage est effectué en suivant une course dudit organe de fermeture de la position d'ouverture (P2) à la position de fermeture (P1).

4. Procédé selon l'une quelconque des revendications de 1 à 3, dans lequel ledit verrouillage du manchon (12) par rapport à la tige (10) consiste en un verrouillage par le biais de la déformation du manchon (12).

5. Procédé selon la revendication précédente, dans lequel ledit verrouillage du manchon (12) comprend une étape impliquant la déformation de l'embout de la tige (10).

6. Procédé selon l'une quelconque des revendications de 1 à 5, dans lequel les étapes suivantes sont envisagées avant l'étape de verrouillage : une étape consistant à détecter la position du manchon (12) le long de la tige (10) et une étape consistant à vérifier que dans la susdite position détectée, le manchon (12) est disposé dans une position prédéfinie le long de la tige (10).

7. Appareil de tarage d'une valve de limitation de pression (1) ayant : un corps de soupape (4) définissant un passage (11) pour un fluide ; un organe de fermeture (8) comprenant une tête (9) et une tige (10) mobile par rapport au corps de soupape (4) le long d'une direction longitudinale (X) d'extension de la tige d'une position (P1) destinée à fermer le passage (11), où la tête (9) est en prise de façon hermétique avec le corps de soupape (4), à une position (P2) destinée à ouvrir le passage (11) et vice versa, respectivement, dans une direction d'ouverture (OD) et une direction de fermeture (CD) ; un manchon (12) pouvant être relié à ladite tige (10) de l'organe de fermeture (8) à une extrémité (51) de la tige (10) opposée à ladite tête (9) ; un ressort (S1) est disposé entre le manchon (12) et le corps de soupape (4) et conçu pour exercer une force sur ledit organe de fermeture (8) le long de la direction de fermeture (CD), l'appareil (60) étant **caractérisé en ce qu'**il comprend :
- des moyens (61) destinés à verrouiller ledit organe de fermeture (8) dans la position fermée (P1) ;
- des moyens (63) servant à détecter une quantité représentant une valeur d'une force de réaction dudit ressort (S1) ;
- des moyens de manipulation (62) conçus pour permettre une variation de la position dudit manchon (12) le long de ladite tige (10) ;
- des moyens servant à effectuer un raccordement non fileté du manchon (12) par rapport à la tige (10) qui peuvent être activés de sorte à permettre le verrouillage irréversible du manchon (12) à la tige (9) dans une position du manchon (12) le long de la tige (10) où une valeur de ladite quantité, représentant une valeur de force de réaction dudit ressort (S1) correspondant à une valeur prédéfinie, est détectée.

8. Appareil selon la revendication précédente, comprenant une unité de commande et opérationnelle reliée :
- aux moyens de détection (63) servant à recevoir un signal concernant ladite quantité représentant une valeur de force de réaction dudit ressort (S1) ;
- aux moyens de manipulation de sorte à les entraîner de manière à varier la position du manchon (12) le long de la tige (10) et à définir la susdite position du manchon (12) le long de la tige (10) où une valeur de ladite quantité, représentant une valeur de force de réaction dudit ressort (S1) correspondant à une valeur prédéfinie, est détectée ;
- et aux moyens de raccordement pour les activer dans la susdite position définie.

9. Appareil selon l'une quelconque des revendications 7 ou 8, dans lequel lesdits moyens de détection comprennent un capteur de force conçu pour détecter une force de réaction dudit ressort (S1).

10. Appareil selon l'une quelconque des revendications précédentes de 7 à 9, dans lequel les moyens de détection comprennent un capteur de position conçu pour détecter une position du manchon (12) le long de ladite tige (10).

11. Appareil selon l'une quelconque des revendications précédentes de 7 à 10, dans lequel les moyens destinés à raccorder le manchon (12) à la tige (10) sont fonctionnellement actifs sur le manchon (12) de sorte à déformer plastiquement le manchon (12).
